# EUROPÄISCHE PATENTSCHRIFT

(11) **EP 3 573 874 B1**
(45) Veröffentlichungstag und Bekanntmachung des Hinweises auf die Patenterteilung: **31.03.2021**
(21) Anmeldenummer: 18704872.3
(22) Anmeldetag: 22.01.2018
(51) Int. Cl.: B62D 1/181, F16H 25/24, F16C 33/58

(54) **MOTORISCH VERSTELLBARE LENKSÄULE FÜR EIN KRAFTFAHRZEUG UND VERSTELLANTRIEB FÜR EINE LENKSÄULE**
MOTOR-ADJUSTABLE STEERING COLUMN FOR A MOTOR VEHICLE AND ADJUSTMENT DRIVE FOR A STEERING COLUMN
COLONNE DE DIRECTION RÉGLABLE DE MANIÈRE MOTORISÉE POUR UN VÉHICULE AUTOMOBILE ET ENTRAÎNEMENT DE RÉGLAGE POUR UNE COLONNE DE DIRECTION

(30) Priorität: 30.01.2017 DE 102017201379
(43) Veröffentlichungstag der Anmeldung: 04.12.2019
(73) Patentinhaber: thyssenkrupp Presta AG, 9492 Eschen (LI); thyssenkrupp AG, 45143 Essen (DE)
(72) Erfinder: SPECHT, Jean-Pierre, 9469 Haag (CH); HUBER, Sebastian, 6811 Göfis (AT)
(74) Vertreter: thyssenkrupp Intellectual Property GmbH
(86) Internationale Anmeldenummer: PCT/EP2018/051428
(87) Internationale Veröffentlichungsnummer: WO 2018/138044

(56) Entgegenhaltungen:
- DE-A1-102014 104 362
- US-A- 4 967 618

## Beschreibung

### Stand der Technik

Die Erfindung betrifft eine motorisch verstellbare Lenksäule für ein Kraftfahrzeug, mit einer Trageinheit, die an einer Fahrzeugkarosserie anbringbar ist, und von der eine Stelleinheit gehalten ist, in der eine Lenkspindel um eine Längsachse drehbar gelagert ist, und mit einem Verstellantrieb, der mit der Trageinheit und mit der Stelleinheit verbunden ist, und von dem die Stelleinheit relativ zur Trageinheit verstellbar ist, wobei der Verstellantrieb eine in eine Spindelmutter eingreifende Gewindespindel mit einer Achse, eine Antriebseinheit und ein von der Antriebseinheit um die Achse drehend antreibbares Getrieberad aufweist, welches einen Verzahnungsabschnitt aufweist, der axial zwischen zwei koaxial zur Achse umlaufenden Lagerflächen angeordnet ist, wobei das Getrieberad drehfest mit der Spindelmutter oder der Gewindespindel verbunden ist, und wobei die Gewindespindel und die Spindelmutter durch die Antriebseinheit um die Achse relativ zueinander drehend antreibbar sind.
Weiterhin betrifft die Erfindung einen Verstellantrieb für eine motorisch verstellbare Lenksäule für ein Kraftfahrzeug, umfassend eine in eine Spindelmutter eingreifende Gewindespindel mit einer Achse, eine Antriebseinheit und ein von der Antriebseinheit um die Achse drehend antreibbares Getrieberad, welches einen Verzahnungsabschnitt aufweist, der axial zwischen zwei koaxial zur Achse umlaufenden Lagerflächen angeordnet ist, wobei das Getrieberad drehfest mit der Spindelmutter oder der Gewindespindel verbunden ist.

Lenksäulen für Kraftfahrzeuge weisen eine Lenkwelle mit einer Lenkspindel auf, an deren in Fahrtrichtung hinteren, dem Fahrer zugewandten Ende ein Lenkrad zur Einbringung eines Lenkbefehls durch den Fahrer angebracht ist. Die Lenkspindel ist um ihre Längsachse in einer Stelleinheit drehbar gelagert, die von einer Trageinheit an der Fahrzeugkarosserie gehalten ist. Dadurch, dass die Stelleinheit in einer mit der Trageinheit verbundenen Mantel-einheit, auch als Führungskasten oder Kastenschwinge bezeichnet, in Richtung der Längsachse teleskopartig verschiebbar aufgenommen ist, kann eine Längsverstellung erfolgen. Eine Höhenverstellung kann dadurch realisiert werden, dass die Stelleinheit oder eine diese aufnehmende Manteleinheit schwenkbar an der Trageinheit gelagert ist. Die Verstellung der Stelleinheit in Längs- bzw. Höhenrichtung ermöglicht die Einstellung einer ergonomisch komfortablen Lenkradposition relativ zur Fahrerposition in Betriebsstellung, auch als Fahr- oder Bedienposition bezeichnet, in der ein manueller Lenkeingriff erfolgen kann.

Es ist im Stand der Technik bekannt, zur Verstellung der Stelleinheit relativ zur Trageinheit einen motorischen Verstellantrieb mit einer Antriebseinheit vorzusehen, die einen elektrischen Stellmotor umfasst, der - in der Regel über ein Getriebe - mit einem Spindeltrieb verbunden ist, der eine in eine Spindelmutter eingeschraubte Gewindespindel umfasst. Durch die Antriebseinheit sind die Gewindespindel und die Spindelmutter gegeneinander um eine Achse, nämlich die Gewindespindelachse, drehend antreibbar, wodurch die Gewindespindel und die Spindelmutter je nach Drehrichtung translatorisch aufeinander zu oder voneinander weg bewegt werden können. In einer ersten Ausführungsform ist die Gewindespindel von der Antriebseinheit, die feststehend mit der Stelleinheit oder der Trageinheit verbunden ist, um ihre Gewindespindelachse drehend antreibbar und greift in die Spindelmutter ein, die an der Trageinheit oder alternativ an der Stelleinheit bezüglich Drehung um die Gewindespindelachse feststehend angebracht ist. In Richtung der Gewindespindelachse stützt sich die Gewindespindel an der Trageinheit oder der Stelleinheit ab, und die Spindelmutter entsprechend an der Stelleinheit oder alternativ an der Trageinheit, so dass ein rotatorischer Antrieb der Gewindespindel eine translatorische Verstellung von Trageinheit und Stelleinheit relativ zueinander in Richtung der Gewindespindelachse bewirkt. Diese Ausführung wird daher auch als Rotationsspindelantrieb bezeichnet.

In einer zweiten, alternativen Ausführungsform ist die Gewindespindel bezüglich Drehung um ihre Gewindespindelachse unverdrehbar mit der Trageinheit oder alternativ mit der Stelleinheit gekoppelt und die Spindelmutter ist drehbar, aber in Richtung der Gewindespindelachse feststehend entsprechend an der Stelleinheit oder alternativ an der Trageinheit gelagert. Wie in der ersten Ausführungsform stützt sich in Richtung der Gewindespindelachse die Gewindespindel an der Trageinheit oder an der Stelleinheit ab, und die Spindelmutter entsprechend an der Stelleinheit oder an der Trageinheit, so dass die Gewindespindel in Richtung der Gewindespindelachse translatorisch verschiebbar ist, indem die Spindelmutter von der Antriebseinheit drehend angetrieben wird. Diese Ausführung wird auch als Tauchspindelantrieb bezeichnet.

Durch den rotatorischen Antrieb der Gewindespindel wird wie bei der ersten Alternative eine translatorische Verstellung von Trageinheit und Stelleinheit relativ zueinander in Richtung der Gewindespindelachse bewirkt. In beiden Ausführungen bildet der Spindeltrieb einen zwischen Trageinheit und Stelleinheit wirksamen motorischen Verstellantrieb, durch den die Stelleinheit zur Verstellung relativ zur Trageinheit verstellt werden kann.

Zur Realisierung einer Längsverstellung der Stelleinheit in Richtung der Längsachse der Lenkspindel kann ein Spindeltrieb eines Verstellantriebs zwischen der Stelleinheit und einer diese axial längsverschieblich aufnehmenden Manteleinheit, auch Führungskasten oder Kastenschwinge genannt, angeordnet sein, welche mit der Trageinheit verbunden ist, und wobei die Gewindespindelachse im Wesentlichen parallel zur Längsachse ausgerichtet sein kann. Zur Höhenverstellung kann ein Spindeltrieb zwischen der Trageinheit und einer daran höhenverschwenkbar gelagerten Stelleinheit oder Manteleinheit, in der die Stelleinheit aufgenommen ist, angeordnet sein. An einer Lenksäule können eine motorische Längs- und Höhenverstellung einzeln oder in Kombination ausgebildet sein.

Der Antrieb des Spindeltriebs erfolgt von der Antriebseinheit über ein um seine Achse, die identisch mit der Gewindespindelachse ist, drehend antreibbares Getrieberad, welches je nach Ausführung des Spindeltriebs mit der Spindelmutter oder mit der Gewindespindel drehfest verbunden ist. Das Getrieberad weist einen Verzahnungsabschnitt in Form eines Stirnrads auf, mit einer außen umlaufenden Verzahnung oder Schneckenverzahnung. Der Verzahnungsabschnitt ist in Achsrichtung zwischen zwei koaxial zur Achse umlaufenden, stirnseitigen Lagerflächen angeordnet. Die Lagerflächen sind in einer Lageranordnung zwischen korrespondierenden Außenlagerflächen angeordnet, die feststehend an der Stelleinheit oder der Trageinheit ausgebildet sind, beispielsweise in einem Lagergehäuse. Dadurch werden die auf das Getrieberad in beiden axialen Richtungen der Gewindespindelachse auf den Spindeltrieb wirkenden Halte- und Verstellkräfte über die Lagerflächen auf die Außenlagerflächen an der Stelleinheit oder der Trageinheit übertragen und das Getrieberad axial abgestützt.

Ein derartiger Verstellantrieb mit einem drehbar gelagerten und axial abgestützten Getrieberad ist beispielsweise aus der US 4,967,618 bekannt. Das Getrieberad weist axial beidseitig bezüglich eines Verzahnungsabschnitts angeordnete axiale Lagerflächen auf, die Laufbahnen für Wälzkörper aufweisen, konkret Kugellaufbahnen von Kugellagern. Zwischen diesen Kugellaufbahnen und korrespondierenden Kugellaufbahnen in axial oder schräg gegenüberliegenden feststehenden Außenlagerflächen sind Kugeln als Wälzkörper angeordnet. Dadurch wird eine Lageranordnung gebildet, in der das Getrieberad in axialer Richtung abgestützt zwischen zwei Drucklagern gelagert ist, die jeweils aus einer Lagerfläche, einer Außenlagerfläche und den dazwischen angeordneten Kugeln gebildet werden.

Die Kugellaufbahnen können gemäß der US 4,967,618 direkt in das Getrieberad eingeformt sein, welches einstückig ausgebildet ist mit der Verzahnung und mit der Spindelmutter, d.h. das in Achsrichtung durchgehende Innengewinde der Spindelmutter aufweist. Vorteilhaft an dieser Ausführung ist, dass ein einziges Bauteil die wesentlichen Funktionen von Lager- und Antriebselement in sich vereinen kann. Nachteilig ist jedoch, dass für die Verzahnung, das Gewinde der Spindelmutter und die Kugellaufbahnen unterschiedliche mechanische Eigenschaften gefordert sind, die teilweise in Konflikt stehen und nicht durch ein einstückiges Bauteil aus einem einzigen Material befriedigt werden können. Beispielsweise sind Kunststoffmaterialien für die Verzahnung und das Gewinde besonders geeignet, jedoch für Kugellaufbahnen ungeeignet, die bevorzugt aus einem harten Wälzlagerstahl gefertigt sind. In dem genannten Stand der Technik wird zwar auch vorgeschlagen, das Getrieberad zwischen zwei separaten Drucklagern axial einzuspannen. Durch die spielfreie axiale Verspannung, die für einen verschleiß- und geräuscharmen Lauf erforderlich ist, und durch die im Betrieb auftretenden Belastungen werden jedoch dauerhaft hohe axiale Kräfte auf das Getrieberad ausgeübt, die zu einer plastischen Verformung eines aus Kunststoff gefertigten Getrieberads führen würden. Das dadurch entstehende Spiel ist nicht akzeptabel. Außerdem führen die separaten Drucklager zu einem hohen Fertigungs- und Montageaufwand.

Angesichts der vorangehend erläuterten Problematik ist es eine Aufgabe der vorliegenden Erfindung, eine Lenksäule mit einem verbesserten Verstellantrieb mit einem optimierten Getrieberad anzugeben, welches verbesserte mechanische Eigenschaften hat, und einen verbesserten Verstellantrieb für eine Lenksäule für ein Kraftfahrzeug.

### Darstellung der Erfindung

Diese Aufgabe wird gelöst durch eine motorisch verstellbare Lenksäule für ein Kraftfahrzeug mit den Merkmalen des Anspruchs 1 und einen Verstellantrieb mit den Merkmalen des Anspruchs 2. Vorteilhafte Weiterbildungen ergeben sich aus den Unteransprüchen.

Zur Lösung der genannten Aufgabe wird eine motorisch verstellbare Lenksäule für ein Kraftfahrzeug vorgeschlagen, mit einer Trageinheit, die an einer Fahrzeugkarosserie anbringbar ist, und von der eine Stelleinheit gehalten ist, in der eine Lenkspindel um eine Längsachse drehbar gelagert ist, und mit einem Verstellantrieb, der mit der Trageinheit und mit der Stelleinheit verbunden ist, und von dem die Stelleinheit relativ zur Trageinheit verstellbar ist, wobei der Verstellantrieb eine in eine Spindelmutter eingreifende Gewindespindel mit einer Achse, eine Antriebseinheit und ein von der Antriebseinheit um die Achse drehend antreibbares Getrieberad aufweist, welches einen Verzahnungsabschnitt aufweist, der axial zwischen zwei koaxial zur Achse umlaufenden Lagerflächen ausgebildet ist, wobei das Getrieberad drehfest mit der Spindelmutter oder der Gewindespindel verbunden ist, und wobei die Gewindespindel und die Spindelmutter durch die Antriebseinheit um die Achse relativ zueinander drehend antreibbar sind. Erfindungsgemäß weist das Getrieberad ein Kernelement auf, mit dem zwei Lagerringe verbunden sind, welche jeweils eine Lagerfläche aufweisen und die sich axial gegeneinander abstützen.

Bevorzugt liegt das Kernelement außerhalb des Kraftflusses zwischen den Lagerringen. Dadurch wird eine auf die Lagerringe in Richtung der Achse wirkende Kraft nicht in das Kernelement eingeleitet. Die sich gegeneinander abstützenden Lagerringe bilden eine Stützeinrichtung, welche axial auf die Lagerringe einwirkende Druckkräfte außerhalb des Kernelements abstützt und somit vom Kernelement abhält,

Weiterhin wird zur Lösung der Aufgabe ein Verstellantrieb für eine motorisch verstellbare Lenksäule für ein Kraftfahrzeug vorgeschlagen, umfassend eine in eine Spindelmutter eingreifende Gewindespindel mit einer Achse, eine Antriebseinheit und ein von der Antriebseinheit um die Achse drehend antreibbares Getrieberad, welches einen Verzahnungsabschnitt aufweist, der axial zwischen zwei koaxial zur Achse umlaufenden Lagerflächen angeordnet ist, wobei das Getrieberad drehfest mit der Spindelmutter oder der Gewindespindel verbunden ist. Erfindungsgemäß wird für einen gattungsgemäßen Verstellantrieb mit den zuvor genannten Merkmalen vorgeschlagen, dass das Getrieberad ein Kernelement aufweist, mit dem zwei Lagerringe verbunden sind, welche jeweils eine Lagerfläche aufweisen und die sich axial gegeneinander abstützen.

Bevorzugt liegt das Kernelement außerhalb des Kraftflusses zwischen den Lagerringen. Dadurch wird eine auf die Lagerringe in Richtung der Achse wirkende Kraft nicht in das Kernelement eingeleitet. Die sich gegeneinander abstützenden Lagerringe bilden eine Stütz-einrichtung, welche axial auf die Lagerringe einwirkende Druckkräfte außerhalb des Kernelements abstützt und somit vom Kernelement abhält,

Bei dem erfindungsgemäßen Getrieberad sind die Lagerringe stirnseitig mit einem Kernelement verbunden, so dass ein montagefreundliches einteiliges Bauteil zur Verfügung gestellt wird. Die Lagerringe sind axial beiderseits des Verzahnungsabschnitts angebracht, und haben jeweils auf ihren vom Kernelement abgewandten Außenseiten, welche auch Außenseiten des Getrieberads bilden, jeweils eine Lagerfläche. Dabei sind die Lagerringe erfindungsgemäß so miteinander verbunden, dass eine in axialer Richtung auf die Lagerflächen eingeleitete Kraft von dem einen Lagerring auf den anderen Lagerring übertragen wird, ohne dass das Kernelement durch die Kraft zwischen den Lagerringen belastet wird. Mit anderen Worten wird das Kernelement beim Einwirken einer axialen Kraft, beispielsweise beim Aufbringen einer axialen Spannkraft zum spielfreien Einstellen der Lager, zwischen den Lagerringen in Achsrichtung belastungsarm gehalten. Dabei kann der axiale Kraftfluss zwischen den Lagerringen dadurch hergestellt werden, dass sich die beiden Lagerringe gegenseitig kontaktieren und axial direkt gegeneinander abstützen, oder mittelbar, wobei zwischen den beiden Lagerringen ein Kraftübertagungselement angeordnet sein kann, welches ebenfalls keine Kraft in axialer Richtung auf das Kernelement überträgt. Die Kraftübertragung in axialer Richtung erfolgt jedenfalls ohne Zwischenschaltung des Kernelements über die durch die Lagerringe gebildete, steife Struktur zur Kraftübertragung bzw. - durchleitung unabhängig vom Kernelement.

Die Lagerflächen werden zwischen Außenlagerflächen einer Lageranordnung angeordnet. Jeweils eine Außenlagerfläche, die üblicherweise an einem Außenring angeordnet ist, liegt dabei axial einer Lagerfläche gegenüber, so dass sich zwischen Außenlagerfläche und Lagerfläche der Lagerspalt befindet. Dadurch, dass die Außenlagerflächen axial gegeneinander verstellt werden, kann der Abstand zu den Lagerflächen und damit das Lagerspiel eingestellt werden, und es kann eine axiale Kraft aufgebracht werden, um die Lagerflächen zwischen den Außenlagerflächen spielfrei zu verspannen.

Die auf die Lagerringe einwirkenden axialen Kräfte werden durch die erfindungsgemäße gegenseitige Abstützung in einem axialen Kraftfluss an dem Kernelement vorbei übertragen. eine axial auf die Lagerflächen ausgeübte Last wird durch die erfindungsgemäße Struktur zwischen den Lagerringen abgefangen und dadurch von dem Kernelement abgehalten. Dadurch, dass sich kein Material des Kernelements im axialen Kraftfluss befindet, wird es nicht durch die beim Verspannen des Lagers und die im Betrieb auftretenden Kräfte belastet.

Dadurch ergibt sich die Möglichkeit, die Materialien der Lagerringe und des Kernelements im Hinblick der im Betrieb geforderten Eigenschaften unabhängig voneinander zu optimieren. Die Lagerringe können bevorzugt aus einem harten, auf Druck unnachgiebigen Material bestehen, welches eine starre und belastbare axiale Verbindung ermöglicht, die zur Aufnahme der auf die Lagerfläche wirkenden Kräfte geeignet ist, und bevorzugt eine integrierte Ausbildung von Gleitlagerflächen oder Wälzkörperlaufbahnen ermöglicht. Diese Anforderungen können beispielsweise durch Stahl gut erfüllt werden. Das Kernelement kann hingegen aus einem weicheren Werkstoff bestehen, beispielsweise aus weicheren Metalllegierungen, wie beispielsweise Messing, oder Kunststoff. Insbesondere Kunststoffe können hinsichtlich ihrer Eigenschaften an die jeweiligen Anforderungen optimiert werden, beispielsweise bezüglich Elastizität und Gleiteigenschaften zur Realisierung spielarmer und laufruhiger Getriebe und Spindeltriebe. Die Eigenschaft von derartigen Kunststoffmaterialien, unter Druck zu fließen und sich plastisch zu verformen, ist bei der erfindungsgemäßen Gestaltung eines Getrieberads nicht maßgeblich, weil potentiell schädliche Kräfte von den sich gegenseitig abstützenden Lagerringen aufgenommen werden, und somit eine unerwünschte Verformung des in axialer Richtungen zwischen den Lagerringen angeordneten Kernelements praktisch ausgeschlossen wird. Dadurch wird eine größere Gestaltungsfreiheit als im Stand der Technik im Hinblick auf die Kombination unterschiedlicher Materialien für die Lagerringe und das Kernelement ermöglicht.

Die Lagerringe können fest, bevorzugt unlösbar mit dem Kernelement verbunden sein, beispielsweise durch stoffschlüssige Verbindung wie Verschweißen oder Verkleben, oder Einbetten bzw. Umspritzen. Dadurch kann das Getrieberad als einteiliges, montagefreundliches Bauteil bereitgestellt werden.

Die Lagerringe sind bevorzugt auf beiden axialen Stirnseiten des Kernelements angebracht, wobei die Lagerflächen vom Kernelement aus gesehen axial nach außen gerichtet sind, beispielsweise als im Wesentlichen kreisringförmige oder konische Lagerflächen. In einer Lageranordnung stehen die Lagerflächen in Gleitkontakt, oder über Wälzkörper in Wälzkontakt mit korrespondierenden, axial beiderseits des Getrieberads angeordneten Außenlagerflächen. Dabei können durch konische Lagerflächen, die auch mit schräg zur Achse liegenden Wälzkörperlaufbahnen versehen sein können, Schräglager realisiert werden, welche gleichzeitig eine optimierte radiale und axiale Lagerung und Abstützung ermöglichen.

Die Lagerringe können zunächst als zwei separate Bauteile bereitgestellt werden, die in dem Getrieberad mit dem Kernelement zusammengefügt werden, so dass sie in axialer Richtung direkt oder mittelbar zur axialen Kraftübertragung miteinander verbunden werden. Die Kraftübertragung kann im direkten Kontakt erfolgen, oder über dazwischen angeordnete Kraftübertragungselemente, welche jedoch keine Kraft in axialer Richtung in das Kernelement einleiten.

Es kann vorgesehen sein, dass die zwei Lagerringe zusammen einstückig ausgebildet sind. Dabei sind beide Lagerringe an einem einteiligen integralen Lagerringelement ausgebildet. Ein derartiges Lagerringelement kann beispielsweise hülsen- oder trommelförmig ausgestaltet sein, wobei sich die Lagerflächen im Bereich der axialen Stirnseiten befinden. Die Lagerflächen sind in axialer Richtung über das Lagerringelement einstückig durchgehend miteinander verbunden. Der Kraftfluss bei einer axialen Belastung erfolgt folglich durch das durchgehende Material des Lagerringeelements. Es ist ebenfalls denkbar und möglich, zunächst separate Lagerringe zu fertigen, und diese in einem weiteren Schritt zu einem Lagerringelement miteinander zu verbinden, bevor die Verbindung mit dem Kernelement erfolgt.

Die Lagerung des Getrieberads kann in Wälzlagern erfolgen, wobei die Lagerflächen der Lagerringe Wälzkörperlaufbahnen aufweisen, bevorzugt Kugellaufbahnen. Die den Lagerringen zugeordneten, axial gegenüberliegenden Außenlagerflächen haben ebenfalls entsprechende Kugellaufbahnen, und zwischen den Kugellaufbahnen sind als Wälzkörper Kugeln abrollbar angeordnet. In dieser Ausführung bilden die Lagerringe Innenringe von Wälzlagern, bevorzugt mit schräg zur Achse liegenden Lagerflächen bzw. Kugellaufbahnen, so dass Schrägkugellager gebildet werden, welche die Aufnahme von Lagerlasten in axialer und radialer Richtung bei einem kompakten Aufbau ermöglichen. Bevorzugt sind die Lagerflächen so ausgebildet, dass das Getrieberad mittels einer X-Lagerung im Gehäuse gelagert ist.

Die Lagerringe und die Außenlagerflächen können auch aufeinander gleitende Gleitflächen aufweisen, so dass eine Gleitlageranordnung gebildet wird.

Es ist möglich, dass die Lagerringe als Blechformteile ausgebildet sind, bevorzugt aus Stahlblech. Derartige Blechformteile können als Press-Stanz-Teile rationell mit den geforderten Eigenschaften gefertigt werden. Es können einzelne Lagerringe als Lagerschalen zur Verfügung gestellt werden, welche jeweils eine Lagerfläche aufweisen, und die erfindungsgemäß miteinander und mit dem Kernelement verbunden werden. Beide Lagerringe können auch an einem einzigen Lagerringelement angeordnet sein, welches durch Verbindung von zwei Lagerringen erzeugt, oder als ein einstückiges Blechformteil aus einem einzigen Blechabschnitt gefertigt sein kann. Das Blechformteil kann integral eingeformte Laufbahnen für Wälzkörper, bevorzugt Kugellaufbahnen aufweisen, die hinreichend hart ausgestaltet sein können, beispielsweise auch mittels durchgehender oder partieller Härtung oder Hartbeschichtung. Die Verbindung der Laufbahnen erfolgt durch einstückig durchgehende Blechabschnitte. Alternativ ist es ebenfalls denkbar und möglich, dass die Lagerringe als Kaltfliesspressteil oder als selektives Laserschmelzbauteil ausgebildet sind.

Eine vorteilhafte Ausführungsform sieht vor, dass der Verzahnungsabschnitt und/oder die Spindelmutter und/oder ein Verbindungsstück integral einstückig mit dem Kernelement ausgebildet ist. Das Kernelement kann aus Materialien gefertigt sein, welche aufgrund ihrer Materialeigenschaften gut geeignet sind zum Einsatz als Getriebeelemente. Beispielsweise sind Kunststoffe gut geeignet zur Bereitstellung laufruhiger und verschließarmer Verzahnungen und Gewindetriebe. Erfindungsgemäß kann die Verzahnung zum Antriebseingriff mit der Antriebseinheit in das aus Kunststoff bestehende Kernelement eingeformt sein, und - in einem Tauchspindelantrieb mit drehend antreibbarer Spindelmutter - kann das Innengewinde der Spindelmutter in das aus Kunststoff bestehenden Kernelement eingeformt sein. Bei einem Rotationsspindelantrieb kann das Kernelement ebenfalls eine einstückig im Kunststoff eingeformte Verzahnung aufweisen, und ein Verbindungsstück zur drehfesten Verbindung des Getrieberads mit der Gewindespindel.

Es ist vorteilhaft, dass das Kernelement als Kunststoff-Spritzgussteil ausgebildet ist. Die Fertigung im Spritzgussverfahren aus thermoplastischen Kunststoffen, beispielsweise Polypropylen (PP), Polyoxymethylen (POM) oder dergleichen, ist rationell und ermöglicht eine flexible Formgebung, auch im Hinblick auf die Ausbildung der Verzahnung oder des Innengewindes. Gegebenenfalls kann der Kunststoff mit einer Bewehrung versehen sein, beispielsweise durch Zusatz von Bewehrungsfasern, um die Festigkeit zu erhöhen.

Die Fertigung des Kernelements als Kunststoff-Spritzgussteil ermöglicht eine besonders vorteilhafte Verbindung mit den Lagerringen dadurch, dass das Kernelement an die Lagerringe angespritzt ist. Dabei werden die Lagerringe in der Kavität eines Spritzgusswerkzeugs angeordnet und von dem darin eingespritzten schmelzflüssigen Kunststoff zumindest teilweise umschlossen, so dass sie nach des Auskühlen stoffschlüssig mit dem Kunststoff des Kernelements verbunden sind. Eine besonders feste Verbindung kann dadurch erreicht werden, dass die Lagerringe mit dem Kernelement stoff- und formschlüssig verbundene Formschlusselemente aufweisen. Die Formschlusselemente können beispielsweise Durchbrechungen und/oder Vorsprünge und/oder eine Rändelung des oder der Lagerringe aufweisen, die beim Spritzen des Kernelements von dem Kunststoffmaterial durchdrungen und darin eingebettet werden. Nach dem Auskühlen sind dadurch die Lagerringe, oder ein beide Lagerringe aufweisendes Lagerringelement über die Formschlusselemente unlösbar fest form- und stoffschlüssig in dem Kernelement verankert. Dadurch können die Verzahnung, das Innengewinde und/oder ein Verbindungsstück langfristig sicher und positionsgenau mit den Lagerringen verbunden werden. Die Fomschlusselemente können auch bei einem nicht als Spritzgussteil gefertigten Kernelement dazu dienen, eine formschlüssige Verbindung zwischen dem Kernelement und einem oder beiden Lagerringen zu erzeugen.

In einem erfindungsgemäßen Verstellantrieb können die Lagerringe zwischen korrespondierenden Außenlagerringen einer Lageranordnung verspannt sein. Zwischen den Außenlagerringen ist das Getrieberad über die Lagerflächen der Lagerringe drehbar gelagert. Zur Einstellung und Minimierung des Lagerspiels können die Außenlagerringe in axialer Richtung gegeneinander, und damit gegen die jeweils korrespondierenden Lagerringe bewegt und mit einer Vorspannkraft angepresst werden. Die Vorspannkraft kann durch elastische Vorspannelemente erzeugt werden, die sich an einem festen Widerlager, beispielsweise einem Lagergehäuse in axialer Richtung abstützen. Je nach Ausführung der Lenksäule kann das Widerlager in Achsrichtung fest an der Stelleinheit, der Trageinheit oder einer mit der Trageinheit verbundenen Manteleinheit angebracht sein. Ein derartiges Vorspannelement kann ein Federelement aufweisen, beispielsweise eine Teller- oder Wellfeder, oder auch ein Elastomerelement in Form eines Gummirings oder dergleichen.

### Beschreibung der Zeichnungen

Vorteilhafte Ausführungsformen der Erfindung werden im Folgenden anhand der Zeichnungen näher erläutert. Im Einzelnen zeigen:
- Figur 1: eine schematische perspektivische Ansicht einer erfindungsgemäßen Lenksäule,
- Figur 2: eine weitere perspektivische Ansicht der erfindungsgemäßen Lenksäule gemäß Figur 1 aus einem anderen Betrachtungswinkel,
- Figur 3: einen Längsschnitt entlang der Gewindespindelachse durch einen Spindeltrieb einer Verstelleinrichtung einer Lenksäule gemäß Figur 1 und 2 in einer perspektivischen Ansicht,
- Figur 4: einen Längsschnitt wie in Figur 3 in Seitenansicht,
- Figur 5: eine auseinandergezogene Darstellung des Spindeltriebs gemäß Figuren 3 und 4,
- Figur 6: eine Detailansicht des Spindeltriebs gemäß Figur 5,
- Figur 7: eine weitere Detailansicht des Spindeltriebs gemäß Figur 5,
- Figur 8: eine seitliche Ansicht erfindungsgemäßer Lagerringe in einer ersten Ausführungsform,
- Figur 9: eine seitliche Ansicht erfindungsgemäßer Lagerringe wie in Figur 8 in einer zweiten Ausführungsform,
- Figur 10: einen Längsschnitt entlang der Gewindespindelachse durch einen Spindeltrieb einer Verstelleinrichtung einer Lenksäule gemäß Figur 1 und 2 in einer zweiten Ausführungsform.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

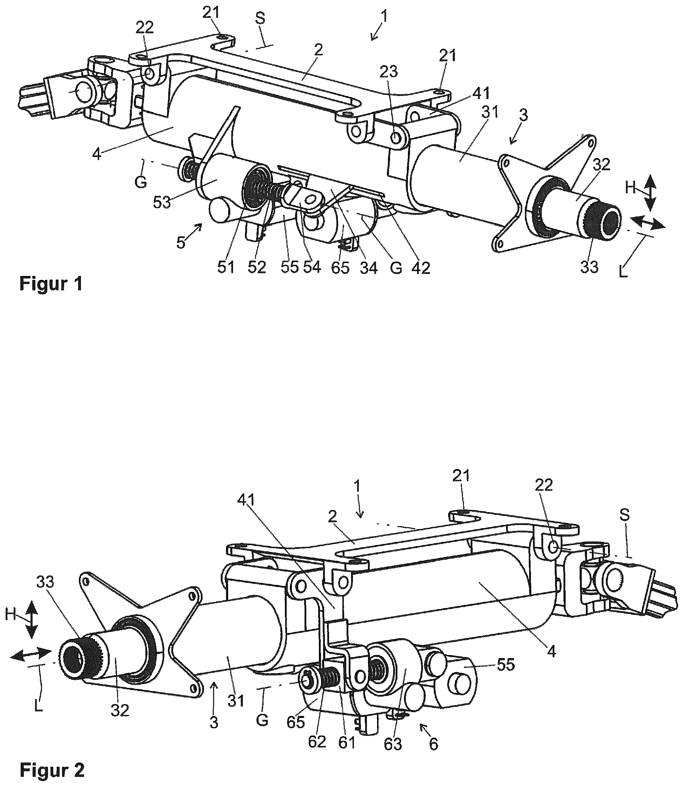

Figur 1 zeigt eine erfindungsgemäße Lenksäule 1 in einer schematischen perspektivischen Ansicht von oben rechts schräg auf das hintere Ende, bezogen auf die Fahrtrichtung eines nicht dargestellten Fahrzeugs, wo ein hier nicht dargestelltes Lenkrad im Bedienungsbereich gehalten wird. Figur 2 zeigt die Lenksäule 1 in einer Ansicht von der gegenüberliegenden Seite, also von oben rechts gesehen.

Die Lenksäule 1 umfasst eine Trageinheit 2, welche als Konsole ausgebildet ist, die Befestigungsmittel 21 in Form von Befestigungsbohrungen aufweist, zur Anbringung an einer nicht dargestellten Fahrzeug-Karosserie. Von der Trageinheit 2 wird eine Stelleinheit 3 gehalten, die in einer Manteleinheit 4 - auch als Führungskasten oder Kastenschwinge bezeichnet-aufgenommen ist.

Die Stelleinheit 3 weist ein Mantelrohr 31 auf, in dem eine Lenkspindel 32 um eine Längsachse L drehbar gelagert ist, die sich axial in Längsrichtung, d.h. in Richtung der Längsachse L, erstreckt. Am hinteren Ende ist an der Lenkspindel 32 ein Befestigungsabschnitt 33 ausgebildet, an dem ein nicht dargestelltes Lenkrad anbringbar ist.

Die Stelleinheit 3 ist zur Realisierung einer Längsverstellung in der Manteleinheit 4 in Richtung der Längsachse L teleskopartig verschiebbar aufgenommen, um das mit der Lenkspindel 32 verbundene Lenkrad relativ zur Trageinheit 2 in Längsrichtung vor und zurück positionieren zu können, wie mit dem Doppelpfeil parallel zur Längsachse L angedeutet.

Die Manteleinheit 4 ist um eine quer zur Längsachse L liegende, horizontale Schwenkachse S verschwenkbar in einem Schwenklager 22 an der Trageinheit 2 gelagert. Im hinteren Bereich ist die Manteleinheit 4 über einen Stellhebel 41 mit der Trageinheit 2 verbunden. Durch eine Drehbewegung des Stellhebels 41 mittels eines dargestellten Stellantriebs 6 (siehe Figur 2) kann die Manteleinheit 4 relativ zur Trageinheit 2 um die im Einbauzustand waagerecht liegende Schwenkachse S verschwenkt werden, wodurch eine Verstellung eines an dem Befestigungsabschnitt 33 angebrachten Lenkrads in Höhenrichtung H vorgenommen werden kann, was mit dem Doppelpfeil angedeutet ist.

Ein erster Verstellantrieb 5 zur Längsverstellung der Stelleinheit 3 relativ zur Manteleinheit 4 in Richtung der Längsachse L weist einen Spindeltrieb mit einer Spindelmutter 51 mit einem sich längs einer Achse G erstreckenden Innengewinde 74 auf, in die eine Gewindespindel 52 eingreift, also mit ihrem Außengewinde in das korrespondierende Innengewinde 74 der Spindelmutter 51 eingeschraubt ist. Die Gewindespindelachse der Gewindespindel 52 ist identisch mit der Achse G und verläuft im Wesentlichen parallel zur Längsachse L.

Die Spindelmutter 51 ist um die Achse G drehbar in einem Lagergehäuse 53 gelagert, welches fest mit der Manteleinheit 4 verbunden ist. In Richtung der Achse G ist die Spindelmutter 51 axial über das Lagergehäuse 53 an der Manteleinheit 4 abgestützt, wie weiter unten noch näher erläutert wird.

Die Gewindespindel 52 ist mit einem an ihrem hinteren Ende ausgebildeten Befestigungselement 54 über ein Übertragungselement 34 mit der Stelleinheit 3 verbunden, und zwar fest in Richtung der Achse G bzw. der Längsachse L und feststehend bezüglich Drehung um die Achse G. Durch die drehend antreibbare Spindelmutter 51 und die bezüglich Drehung feststehende Gewindespindel 52 wird ein sogenannter Tauchspindelantrieb realisiert.

Dass Übertragungselement 34 erstreckt sich von der Stelleinheit 3 durch eine schlitzförmige Durchgangsöffnung 42 in der Manteleinheit 4. Zur Verstellung der Lenksäule 1 in Längsrichtung kann das Übertragungselement 34 frei in der Durchgangsöffnung 42 in Längsrichtung entlangbewegt werden.

Der Verstellantrieb 5 weist einen elektrischen Stellmotor 55 auf, von dem die Spindelmutter 51 bezüglich der Achse G relativ zur feststehenden Gewindespindel 52 drehend antreibbar ist. Dadurch kann - je nach Drehrichtung des Stellmotors 55 - die Gewindespindel 52 in Richtung der Achse G translatorisch relativ zur Spindelmutter 51 verlagert werden, so dass entsprechend die mit der Gewindespindel 52 verbundene Stelleinrichtung 3 relativ zu der mit der Spindelmutter 51 verbundenen Manteleinheit 4 in Richtung der Längsachse L verstellt wird. Der Antrieb der Spindelmutter 51 sowie die Abstützung der Spindelmutter 51 in Richtung der Achse G an der Manteleinheit 4 wird weiter unten noch detailliert erläutert.

In Figur 2, welche eine perspektivische Ansicht der Lenksäule 1 von der in Figur 1 hinten liegenden Seite zeigt, ist erkennbar, wie ein zweiter Verstellantrieb 6 zur Verstellung in Höhenrichtung H an der Lenksäule 1 angebracht ist. Dieser Verstellantrieb 6 umfasst eine Spindelmutter 61, in deren Innengewinde 74 längs einer Achse G eine Gewindespindel 62 eingreift. Die Gewindespindel 62 ist in einem Lagergehäuse 63, welches an der Manteleinheit 4 befestigt ist, drehbar um die Achse G gelagert und axial, in Richtung der Achse G, an der Manteleinheit 4 abgestützt, und von einem elektrischen Stellmotor 65 wahlweise in beide Rotationsrichtungen um die Achse G drehend antreibbar. Dies wird weiter unten noch im Detail erläutert.

Die Spindelmutter 61 ist bezüglich einer Drehung um die Achse G feststehend an einem Ende des zweiarmigen Stellhebels 41 angebracht, der um ein Schwenklager 23 drehbar an der Trageinheit 22 gelagert ist, und dessen anderer Arm mit dem anderen Ende mit der Manteleinheit 4 verbunden ist.

Durch Drehung der Gewindespindel 61 kann -je nach Drehrichtung des Stellmotors 65 - die Spindelmutter 61 in Richtung der Achse G translatorisch relativ zur Gewindespindel 62 verlagert werden, so dass entsprechend die über den Stellhebel 41 mit der Spindelmutter 41 verbundene Manteleinheit 4 samt der darin aufgenommenen Stelleinrichtung 3 relativ zu der Trageinheit 2 in Höhenrichtung H auf oder ab verstellt werden kann, wie mit dem Doppelpfeil angedeutet. Der Antrieb der Gewindespindel 62 sowie die Abstützung der Gewindespindel 62 in Richtung der Achse G an der Manteleinheit 4 wird im Folgenden noch näher erläutert.

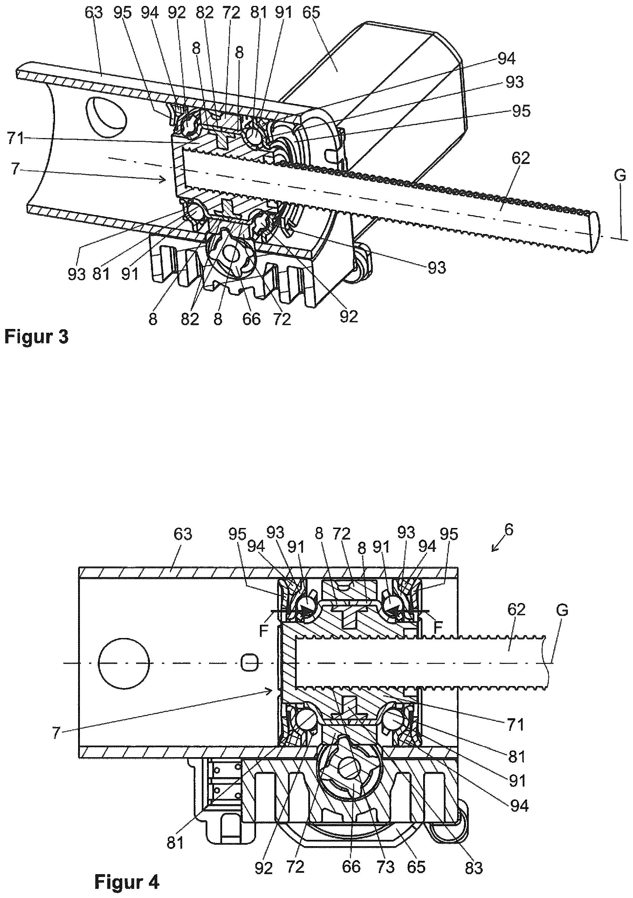

Figur 3 und Figur 4 stellen einen Längsschnitt durch das Lagergehäuse 63 des Verstellantriebs 6 entlang der Achse G in unterschiedlichen Ansichten dar.

Auf der Gewindespindel 62 ist drehfest bezüglich der Achse G ein erfindungsgemäß ausgestaltetes Getrieberad 7 befestigt. Das Getrieberad 7 weist ein aus Kunststoff gefertigtes Kernelement 71 auf, welches bevorzugt aus einem thermoplastischen Kunststoff wie PP, POM oder dergleichen als Kunststoff-Spritzgussteil hergestellt ist. An seinem äußeren Umfang weist das Kernelement 7 eine koaxial zur Achse G umlaufende Verzahnung 72 auf, die im dargestellten Beispiel als Schneckenverzahnung ausgebildet ist, so dass das Getrieberad 7 ein Schneckenrad bildet. In die Verzahnung 72 greift eine von dem Stellmotor 65 drehend antreibbare Schnecke 66 ein.

Das Kernelement 71 ist im Bereich eines zentralen Verbindungsabschnitts 73, der ein Verbindungsstück bildet, drehfest mit der Gewindespindel 62 verbunden. Die Verbindung kann beispielsweise stoffschlüssig ausgeführt sein, indem das Kernelement 71 an die Gewindespindel 62 im Spritzguss an die Gewindespindel 62 angespritzt ist. Zusätzlich oder alternativ kann eine formschlüssige und/oder andere Befestigung vorgesehen sein.

Mit dem Kernelement 71 sind Lagerringe 8 fest verbunden. Jeder Lagerring 8 weist eine als Kugellaufbahn ausgebildete, koaxial zur Achse G ringförmige Lagerfläche 81 auf. Die beiden Lagerflächen 81 laufen vom Kernelement 71 aus gesehen nach außen, stirnseitig konisch zusammen. Mit anderen Worten stehen die Kugellaufbahnen schräg zur Achse G.

Die Lagerringe 8 weisen axial in Richtung der Achse G gegeneinander gerichtete Stützabschnitte 82 auf, die im gezeigten Beispiel unmittelbar gegeneinander anliegen, so dass die Lagerringe 8 in Richtung der Achse G unmittelbar gegeneinander abgestützt sind. Insbesondere befindet sich kein Kunststoffmaterial des Kernelements 71 zwischen den miteinander in Kontakt stehenden Stützabschnitten 82 der Lagerringe 8.

Die Lagerringe 8 sind bevorzugt als Blechformteile ausgebildet, besonders bevorzugt als Press-Stanz-Teile aus Stahlblech. Zu Verbindung mit dem Getrieberad 7 sind die Lagerringe 8 von dem Kunststoff des Kernelements 71 umspritzt, und ist so bis auf die stirnseitig nach außen frei liegenden Lagerflächen 81 stoff- und formschlüssig in das Kernelement 71 eingebettet. Optional kann eine Fixierelement 83 vorgesehen sein, an dem die beiden Lagerringe 8 während des Umspritzens mit Kunststoff relativ zueinander positioniert und gehalten werden, so dass sie axial in Richtung der Achse G gegeneinander anliegen. Das Fixierelement 83 kann aber auch weggelassen werden. Alternativ ist es auch denkbar, die Lagerringe 8 vor dem Umspritzen direkt miteinander zu verbinden, beispielsweise durch eine Punktverschweißung oder dergleichen.

Die Lagerflächen 81 bilden die Innenringe einer Wälzlageranordnung 9, welche Kugeln 91 umfasst, die in einem Kugelkäfig 92 drehbar gehalten werden und im axialen Lagerspalt zwischen den besagten Kugellaufbahnen der Lagerflächen 81 und korrespondierenden Kugellaufbahnen in Außenlagerringen 93 abrollbar angeordnet sind. Die Außenlagerringe 93 sind, vom Getrieberad 7 aus gesehen auf beiden Stirnseiten, axial nach außen über elastische Federelemente 94, im gezeigten Beispiel Elastomer- oder Gummiringe, gegen axiale Widerlager in Form von Sicherungsringen 95 abgestützt, die ihrerseits in axialer Richtung der Achse G feststehend mit dem Lagergehäuse 93 verbunden sind, beispielsweise durch Verkeilen, Verstemmen oder Verklemmen. Das Federelement 94 kann ebenfalls als Wellfeder oder Tellerfeder ausgebildet sein.

Bei der Montage der Wälzlageranordnung 9 wird zur Vermeidung von Lagerspiel in Richtung der Achse G eine axiale Vorspannkraft F aufgebracht. Diese wird von den Sicherungsringen 95, den Federelementen 94, und die Kugeln 91 auf die Lagerflächen 81 der Lagerringe 8 auf die Lagerringe 8 aufgebracht, wie in Figur 4 mit den Kraftpfeilen eingezeichnet. Die Vorspannkraft F wird während der gesamten Lebensdauer durch die elastischen Federelemente 94 aufrecht gehalten. Dadurch werden die beiden Lagerringe 8 axial gegeneinander angepresst, wobei die auf die Lagerflächen 81 im Betrieb einwirkende Kraft F vollständig im Kraftfluss durch die Lagerringe 8 übertragen wird. Dabei ist insbesondere vorteilhaft, dass sich das Kunststoffmaterial des Kernelements 71 nicht im Kraftfluss zwischen den Lagerringen 8 befindet, also nicht auf Druck beansprucht wird. Durch diese Entlastung wird sichergestellt, dass das Kunststoffmaterial nicht durch Fließen plastisch deformiert wird.

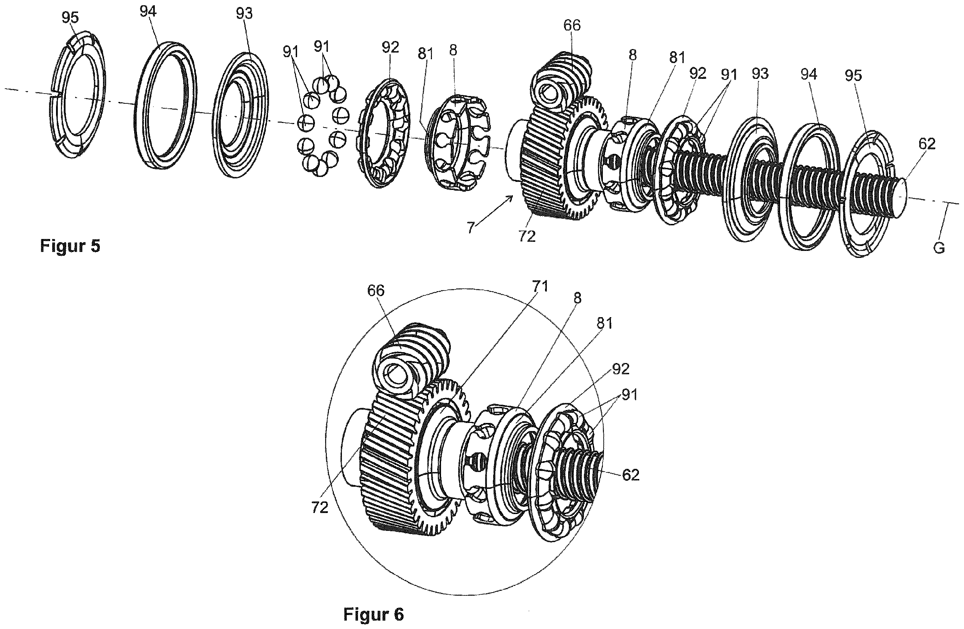

In Figur 5 sind die Einzelteile des Getrieberads 7 und der Wälzlageranordnung 9 in einer Explosionsdarstellung in Richtung der Achse G auseinander gezogen dargestellt, Figur 6 zeigt eine vergrößerte Detailansicht daraus.

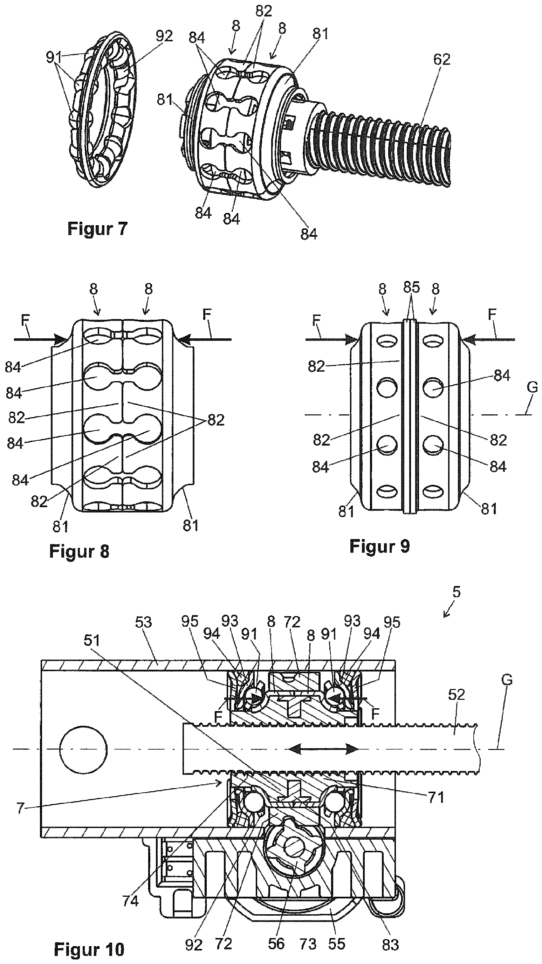

Figur 7 und Figur 8 zeigen die Lagerringe 8 in der Positionierung, in der sie in den Kunststoff eingespritzt sind, wobei zur besseren Übersicht das Kernelement 71 weggelassen ist. Daraus geht deutlich die aus den beiden im Bereich der Stützabschnitte 82 axial gegeneinander anliegenden Lagerringen 8 gebildete trommel- oder rohrhülsenförmige Anordnung hervor, welche den erfindungsgemäßen Kraftfluss der Kraft F zwischen den einander gegenüberliegenden Lagerflächen 81 ermöglicht, ohne dass das Kunststoffmaterial des Kernelements 71 daran beteiligt ist.

Zur Verankerung in dem Kunststoff des Kernelements 71 können die Lagerringe 8 Formschlusselemente in Form von Durchbrechungen 84 aufweisen, die in dem in Figur 8 gezeigten Beispiel durch das Blech zwischen den Stützabschnitten 82 offen durchgehen, und auch in axialer Richtung offen sind. Beim Spritzgießen zur Fertigung des Kernelements 71 werden die Durchbrechungen 84 von der Kunststoffschmelze umströmt und somit in das Kernelement 71 stoff- und formschlüssig eingebettet.

Eine alternative Ausführung in derselben Ansicht wie Figur 8 zeigt Figur 9. Darin sind die Durchbrechungen 84 als randseitig umschlossene Öffnungen ausgebildet. Als zusätzliches Formschlusselement ist ein nach außen vorstehender, wulstförmiger Vorsprung 85 in dem Bereich des Stützabschnitts 82 vorgesehen, in dem die Lagerringe 8 in Richtung der Achse G gegeneinander anliegen. Dadurch sind die Lagerringe 8 relativ zueinander ebenfalls sicher positioniert und gehalten.

In derselben Ansicht wie in Figur 4 ist in Figur 10 ein Längsschnitt durch die Tauchspindelanordnung des Verstellantriebs 5 aus Figur 1 gezeigt, die eine von dem Antriebsmotor 55 drehbar antreibbare Gewindespindel 52 hat. Dieser Verstellantrieb 5 weist ebenfalls ein Getrieberad 7 auf, in dessen Kernelement 71 die Spindelmutter 51 integral ausgebildet ist. Hierzu ist ein Innengewinde 74 in das Kernelement 71 im Spritzgußverfahren eingeformt. Das hat den besonderen Vorteil, dass durch den Kunststoff-Metall-Kontakt zwischen dem Innengewinde 74 der Spindelmutter 51 und der aus Stahl bestehenden Gewindespindel 52 der Spindeltrieb besonders laufruhig, spielarm und verschleißarm ist. Ansonsten sind die einzelnen funktionalen Bestandteile des Getrieberads 7 ausgestaltet wie in dem zu Figur 4 beschriebenen Beispiel des Rotationsspindelantriebs. Die Vorteile im Hinblick auf die in Richtung der Achse G im Wesentlichen kräftefreie Befestigung des Kernelements 71 sind identisch.

### Bezugszeichenliste

- 1: Lenksäule
- 2: Trageinheit
- 21: Befestigungsmittel
- 22, 23: Schwenklager
- 3: Stelleinheit
- 31: Mantelrohr
- 32: Lenkspindel
- 33: Befestigungsabschnitt
- 34: Übertragungselement
- 4: Manteleinheit
- 41: Stellhebel
- 42: Durchgangsöffnung
- 5,6: Verstellantrieb
- 51, 61: Spindelmutter
- 52, 62: Gewindespindel
- 53, 63: Lagergehäuse
- 54: Befestigungselement
- 55, 65: Stellmotor
- 56, 66: Schnecke
- 7: Getrieberad
- 71: Kernelement
- 72: Verzahnung (Schneckenverzahnung)
- 73: Verbindungsabschnitt
- 74: Innengewinde
- 8: Lagerring
- 81: Lagerfläche (Kugellaufbahn)
- 82: Stützabschnitt
- 83: Fixierelement
- 84: Durchbrechungen
- 85: Vorsprung
- 9: Wälzlageranordnung
- 91: Kugeln
- 92: Kugelkäfig
- 93: Außenlagerringe
- 94: Federelemente
- 95: Sicherungsringe
- L: Längsachse
- H: Höhenrichtung
- G: Achse (Gewindespindelachse)

## Patentansprüche

1. Verstellantrieb (5, 6) für eine motorisch verstellbare Lenksäule (1) für ein Kraftfahrzeug, umfassend eine in eine Spindelmutter (51, 61) eingreifende Gewindespindel (52, 62) mit einer Achse (G), eine Antriebseinheit (55) und ein von der Antriebseinheit (55) um die Achse (G) drehend antreibbares Getrieberad (7), welches einen Verzahnungsabschnitt (72) aufweist, der axial zwischen zwei koaxial zur Achse (G) umlaufenden Lagerflächen (81) angeordnet ist, wobei das Getrieberad (7) drehfest mit der Spindelmutter (51) oder der Gewindespindel (62) verbunden ist,
**dadurch gekennzeichnet,**
**dass** das Getrieberad (7) ein Kernelement (71) aufweist, mit dem zwei Lagerringe (8) verbunden sind, welche jeweils eine Lagerfläche (81) aufweisen und die sich axial gegeneinander abstützen.

2. Verstellantrieb (5, 6) nach Anspruch 1, **dadurch gekennzeichnet, dass** die Lagerringe (8) zusammen einstückig durchgehend miteinander verbunden ausgebildet sind.

3. Verstellantrieb (5, 6) nach Anspruch 1 oder 2, **dadurch gekennzeichnet, dass** die Lagerflächen (81) der Lagerringe (8) Wälzkörperlaufbahnen aufweisen, bevorzugt Kugellaufbahnen.

4. Verstellantrieb (5, 6) nach einem der Ansprüche 1 bis 3, **dadurch gekennzeichnet, dass** die Lagerringe (8) als Blechformteile ausgebildet sind.

5. Verstellantrieb (5, 6) nach einem der Ansprüche 1 bis 4, **dadurch gekennzeichnet, dass** der Verzahnungsabschnitt (72) und/oder die Spindelmutter (51) und/oder ein Verbindungsstück (73) einstückig mit dem Kernelement (71) ausgebildet ist.

6. Verstellantrieb (5, 6) nach einem der Ansprüche 1 bis 5, **dadurch gekennzeichnet, dass** das Kernelement (71) als Kunststoff-Spritzgussteil ausgebildet ist.

7. Verstellantrieb (5, 6) nach Anspruch 6, **dadurch gekennzeichnet, dass** das Kernelement (71) an die Lagerringe (8) angespritzt ist.

8. Verstellantrieb (5, 6) nach einem der Ansprüche 1 bis 7, **dadurch gekennzeichnet, dass** die Lagerringe (8) mit dem Kernelement (71) verbundene Formschlusselemente (84, 85) aufweisen.

9. Verstellantrieb (5, 6) nach einem der Ansprüche 1 bis 8, **dadurch gekennzeichnet, dass** die Lagerringe (8) zwischen korrespondierenden Außenlagerringen (93) einer Lageranordnung (9) verspannt sind.

10. Motorisch verstellbare Lenksäule (1) für ein Kraftfahrzeug, mit einer Trageinheit (2), die an einer Fahrzeugkarosserie anbringbar ist, und von der eine Stelleinheit (3) gehalten ist, in der eine Lenkspindel (32) um eine Längsachse (L) drehbar gelagert ist, und mit einem Verstellantrieb (5, 6) nach Anspruch 1, der mit der Trageinheit (2) und mit der Stelleinheit (3) verbunden ist, und von dem die Stelleinheit (3) relativ zur Trageinheit (2) verstellbar ist, wobei der Verstellantrieb (5, 6) eine in eine Spindelmutter (51) eingreifende Gewindespindel (52, 62) mit einer Achse (G), eine Antriebseinheit (55, 65) und ein von der Antriebseinheit (55, 65) um die Achse (G) drehend antreibbares Getrieberad (7) aufweist, welches einen Verzahnungsabschnitt (72) aufweist, der axial zwischen zwei koaxial zur Achse (G) umlaufenden Lagerflächen (81) angeordnet ist, wobei das Getrieberad (7) drehfest mit der Spindelmutter (51) oder der Gewindespindel (62) verbunden ist, und wobei die Gewindespindel (52, 62) und die Spindelmutter (51, 61) durch die Antriebseinheit (55, 65) um die Achse (G) relativ zueinander drehend antreibbar sind,
**dadurch gekennzeichnet,**
**dass** das Getrieberad (7) ein Kernelement (71) aufweist, mit dem zwei Lagerringe (8) verbunden sind, welche jeweils eine Lagerfläche (81) aufweisen und die sich axial gegeneinander abstützen.

## Claims

1. Adjustment drive (5, 6) for a steering column (1) that is adjustable by motor for a motor vehicle, said adjustment drive comprising a threaded spindle (52, 62) with an axis (G), said threaded spindle engaging in a spindle nut (51, 61), a drive unit (55) and a gear wheel (7) which is driveable to rotate about the axis (G) by the drive unit (55) and which has a toothing portion (72), which is arranged axially between two circumferential bearing faces (81) that are coaxial to the axis (G), wherein the gear wheel (7) is connected to the spindle nut (51) or the threaded spindle (62) for rotation therewith,
**characterized**
**in that** the gear wheel (7) has a core element (71), to which two bearing rings (8) are connected, said bearing rings each having a bearing face (81) and being axially supported against one another.

2. Adjustment drive (5, 6) according to Claim 1, **characterized in that** the bearing rings (8) are embodied together so as to be continuously connected to one another in integral fashion.

3. Adjustment drive (5, 6) according to Claim 1 or 2, **characterized in that** the bearing faces (81) of the bearing rings (8) have rolling body raceways, preferably ball-bearing raceways.

4. Adjustment drive (5, 6) according to any one of Claims 1 to 3, **characterized in that** the bearing rings (8) are embodied as sheet metal shaped parts.

5. Adjustment drive (5, 6) according to any one of Claims 1 to 4, **characterized in that** the toothing portion (72) and/or the spindle nut (51) and/or a connecting piece (73) has an integral embodiment with the core element (71).

6. Adjustment drive (5, 6) according to any one of Claims 1 to 5, **characterized in that** the core element (71) is embodied as a plastics injection-moulded part.

7. Adjustment drive (5, 6) according to Claim 6, **characterized in that** the core element (71) is injection moulded onto the bearing rings (8).

8. Adjustment drive (5, 6) according to any one of Claims 1 to 7, **characterized in that** the bearing rings (8) comprise interlock elements (84, 85) that are connected to the core element (71).

9. Adjustment drive (5, 6) according to any one of Claims 1 to 8, **characterized in that** the bearing rings (8) are braced between corresponding outer bearing rings (93) of a bearing arrangement (9).

10. Steering column (1) that is adjustable by motor for a motor vehicle, comprising a carrying unit (2), which is attachable to a vehicle body, and which holds an actuating unit (3), in which a steering spindle (32) is rotatably mounted about a longitudinal axis (L), and comprising an adjustment drive (5, 6) according to Claim 1, which is connected to the carrying unit (2) and to the actuating unit (3), and by means of which the actuating unit (3) is adjustable relative to the carrying unit (2), wherein the adjustment drive (5, 6) comprises a threaded spindle (52, 62) with an axis (G), said threaded spindle engaging in a spindle nut (51), a drive unit (55, 65) and a gear wheel (7) which is driveable to rotate about the axis (G) by the drive unit (55, 65) and which has a toothing portion (72), which is arranged axially between two circumferential bearing faces (81) that are coaxial to the axis (G), wherein the gear wheel (7) is connected to the spindle nut (51) or the threaded spindle (62) for rotation therewith, and wherein the threaded spindle (52, 62) and the spindle nut (51, 61) are driveable to rotate relative to one another about the axis (G) by the drive unit (55, 65),
**characterized**
**in that** the gear wheel (7) has a core element (71), to which two bearing rings (8) are connected, said bearing rings each having a bearing face (81) and being axially supported against one another.

## Revendications

1. Entraînement de réglage (5, 6) pour une colonne de direction (1) à réglage motorisé pour un véhicule automobile, comprenant une broche filetée (52, 62) s'engageant dans un écrou de broche (51, 61), avec un axe (G), une unité d'entraînement (55) et une roue de transmission (7) pouvant être entraînée en rotation autour de l'axe (G) par l'unité d'entraînement (55), laquelle présente une portion de denture (72) qui est disposée axialement entre deux surfaces de palier (81) s'étendant sur la périphérie coaxialement par rapport à l'axe (G), la roue de transmission (7) étant connectée de manière solidaire en rotation à l'écrou de broche (51) ou à la broche filetée (62),
**caractérisé en ce que**
la roue de transmission (7) présente un élément de noyau (71) auquel sont connectées deux bagues de palier (8) qui présentent chacune une surface de palier (81) et qui s'appuient axialement l'une contre l'autre.

2. Entraînement de réglage (5, 6) selon la revendication 1, **caractérisé en ce que** les bagues de palier (8) sont réalisées de manière connectée l'une à l'autre de manière continue ensemble d'une seule pièce.

3. Entraînement de réglage (5, 6) selon la revendication 1 ou 2, **caractérisé en ce que** les surfaces de palier (81) des bagues de palier (8) présentent des chemins de roulement de corps de roulement, de préférence des chemins de roulement de billes.

4. Entraînement de réglage (5, 6) selon l'une quelconque des revendications 1 à 3, **caractérisé en ce que** les bagues de palier (8) sont réalisées sous forme de pièces façonnées en tôle.

5. Entraînement de réglage (5, 6) selon l'une quelconque des revendications 1 à 4, **caractérisé en ce que** la portion de denture (72) et/ou l'écrou de broche (51) et/ou une pièce de connexion (73) sont réalisés d'une seule pièce avec l'élément de noyau (71) .

6. Entraînement de réglage (5, 6) selon l'une quelconque des revendications 1 à 5, **caractérisé en ce que** l'élément de noyau (71) est réalisé sous forme de pièce moulée par injection de plastique.

7. Entraînement de réglage (5, 6) selon la revendication 6, **caractérisé en ce que** l'élément de noyau (71) est surmoulé sur les bagues de palier (8) .

8. Entraînement de réglage (5, 6) selon l'une quelconque des revendications 1 à 7, **caractérisé en ce que** les bagues de palier (8) présentent des éléments d'engagement par correspondance de formes (84, 85) connectés à l'élément de noyau (71).

9. Entraînement de réglage (5, 6) selon l'une quelconque des revendications 1 à 8, **caractérisé en ce que** les bagues de palier (8) sont serrées entre des bagues de palier extérieures correspondantes (93) d'un agencement de palier (9).

10. Colonne de direction (1) à réglage motorisé pour un véhicule automobile, comprenant une unité de support (2) qui peut être montée sur une carrosserie de véhicule, et par laquelle est retenue une unité de commande (3) dans laquelle une broche de direction (32) est supportée de manière rotative autour d'un axe longitudinal (L), et comprenant un entraînement de réglage (5, 6) selon la revendication 1, lequel est connecté à l'unité de support (2) et à l'unité de commande (3), et par lequel l'unité de commande (3) peut être réglée par rapport à l'unité de support (2), l'entraînement de réglage (5, 6) présentant une broche filetée (52, 62) s'engageant dans un écrou de broche (51), avec un axe (G), une unité d'entraînement (55, 65) et une roue de transmission (7) pouvant être entraînée en rotation autour de l'axe (G) par l'unité d'entraînement (55, 65), laquelle présente une portion de denture (72) qui est disposée axialement entre deux surfaces de palier (81) s'étendant sur la périphérie coaxialement par rapport à l'axe (G), la roue de transmission (7) étant connectée de manière solidaire en rotation à l'écrou de broche (51) ou à la broche filetée (62), et la broche filetée (52, 62) et l'écrou de broche (51, 61) pouvant être entraînés en rotation l'un par rapport à l'autre autour de l'axe (G) par l'unité d'entraînement (55, 65),
**caractérisée en ce que**
la roue de transmission (7) présente un élément de noyau (71) auquel sont connectées deux bagues de palier (8) qui présentent chacune une surface de palier (81) et qui s'appuient axialement l'une contre l'autre.
